# EUROPEAN PATENT SPECIFICATION

(11) **EP 4 697 710 B1**
(45) Date of publication and mention of the grant of the patent: **03.06.2026**
(21) Application number: 24194447.9
(22) Date of filing: 14.08.2024
(51) Int. Cl.: H04N 19/17, H04N 19/187, H04N 19/30, H04N 19/33

(54) **METHOD, DEVICE, SYSTEM, AND NON-TRANSITORY COMPUTER-READABLE STORAGE MEDIUM FOR RENDERING OVERLAYS IN A HIERARCHICALLY ENCODED VIDEO SEQUENCE**
VERFAHREN, VORRICHTUNG, SYSTEM UND NICHTTRANSITORISCHES COMPUTERLESBARES SPEICHERMEDIUM ZUR DARSTELLUNG VON ÜBERLAGERUNGEN IN EINER HIERARCHISCH CODIERTEN VIDEOSEQUENZ
PROCÉDÉ, DISPOSITIF, SYSTÈME ET SUPPORT DE STOCKAGE LISIBLE PAR ORDINATEUR NON TRANSITOIRE POUR RESTITUER DES SUPERPOSITIONS DANS UNE SÉQUENCE VIDÉO CODÉE HIÉRARCHIQUEMENT

(43) Date of publication of application: 18.02.2026
(73) Proprietor: Axis AB, 223 69 Lund (SE)
(72) Inventor: Toresson, Alexander, 223 69 LUND (SE); Ardö, Björn, 223 69 LUND (SE)
(74) Representative: AWA Sweden AB

(56) References cited:
- GB-A- 2 617 491

## Description

### Technical Field

The present invention relates to hierarchical video coding and in particular to a method, device and non-transitory computer-readable storage medium for rendering overlays in a hierarchically encoded video sequence.

### Background

The advent of hierarchical video coding has significantly advanced the efficiency and flexibility of video streaming technologies. Hierarchical coding, such as Low Complexity Enhancement Video Coding (LCEVC), is an encoding technique in which video data is encoded in multiple layers, and allows for the delivery of video content at varying resolutions from a single encoded source. This approach starts with a base layer containing a lower resolution version of the video and adds one or more enhancement layers that provide the information needed to reconstruct the video at higher resolutions. Such a scalable method is e.g., advantageous for adaptive streaming technologies that need to adjust to varying network conditions and device capabilities.

A challenge within hierarchical coding is the rendering and alignment of overlays, such as text or graphics, across different resolutions. Overlays rendered directly at the resolution they are displayed often achieve better visual quality than those scaled from a higher resolution. For instance, text rendered at high resolution and then downscaled can lose clarity and sharpness. Therefore, applying distinct overlays directly to both the base and enhancement layers may be desirable to maintain high visual quality at both resolutions, in particular when using the base layer as a data stream of its own.

However, this approach introduces a complexity when considering how to achieve precise alignment of overlays across different resolutions. Misalignment can occur due to slight variations in rendering processes, such as positioning, hinting, and kerning, which can cause discrepancies between the base and enhancement layers. These discrepancies, even if minor, can accumulate and result in noticeable misalignment, adversely affecting the visual quality and increasing the bitrate needed to encode the enhancement layer.

There is thus a need for improvements in this context.

GB 2617491 (V NOVA INT LTD) discloses methods for combining a High dynamic range (HDR) video stream and a Standard dynamic range (SDR) video stream. One or both of the HDR and the SDR video streams can have an overlay.

### Summary

In view of the above, solving or at least reducing one or several of the drawbacks discussed above would be beneficial, as set forth in the attached independent patent claims.

The present invention is defined in the independent claims.

Advantageously, this method provides alignment for at least one glyph of the first pattern between the two resolutions, facilitating that the pattern of glyphs is consistently rendered across both the lower and higher resolutions. Due to the alignment of the rendered position (the first and the second pixel position) of the first glyph, the differences between the lower and higher resolution versions of the video sequence may be reduced. This leads to a smaller residual, which in turn reduces the bitrate required for encoding the enhancement layer. Consequently, this method enhances compression efficiency, resulting in a more streamlined and efficient encoding process that conserves bandwidth and storage resources.

As used herein, "ratio" refers to the proportional relationship between the first resolution and the second resolution. This ratio is employed to map the pixel positions of glyphs from the first resolution to the second resolution. Specifically, when a glyph is rendered at a particular pixel position in the first resolution, the ratio determines the corresponding pixel position in the second resolution. For instance, if the second resolution is twice the first resolution in both width and height, the ratio (or scaling factor) would be 1:2 between the first and the second resolution, meaning the pixel coordinates (second pixel position) in the second resolution would be scaled by a factor of two compared to the pixel coordinates (first pixel position) in the first resolution. It should be noted that the ratio is not limited to be the same in both height and width. For example, the ratio may be 1:2 in width and 1: 1.5 in height. In this case, a glyph's pixel position might be scaled differently horizontally compared to vertically. Advantageously, such mapping facilitates that the first glyph is accurately rendered in the same relative positions across both resolutions, allowing the first glyph to be aligned between the first and second overlays. When the scaling involves scaling by a non-natural number, e.g., according to a 1:1.5 ratio, the second pixel position obtained by mapping the first pixel position according to the ratio may end up being a sub-pixel position. In that case, it may be rounded to the closest pixel position in the video sequence at the second resolution. Even in that case, the alignment between the first and second overlays will be good enough to provide the desired bitrate reduction.

As used herein, "glyph" refers to a visual symbol or character that is rendered as part of an overlay in a video sequence. Glyphs can represent text, icons, or other graphic elements that are superimposed on the video sequence to provide additional information or visual effects.

As used herein, "glyph rendered at a pixel position" and similar expressions refer to the specific placement of a glyph at a particular coordinate within the video sequence of the relevant resolution. The pixel position that is aligned between two resolutions may be, for example, the top-left pixel position of the first glyph in the first and second overlay, or any other suitable pixel position (such as the visual or geometric centre position, the lower right position, etc.) that serves as a reference point. This reference point is used to ensure that the glyphs maintain consistent alignment when rendered across different resolutions, facilitating accurate mapping, and reducing discrepancies between the overlays rendered at different resolutions.

In the context of this disclosure, the terms "first", "second", "third", and so forth do not necessarily indicate sequential order or priority. Instead, these terms are used solely for the purpose of identifying and distinguishing between different features, elements, or steps within the description. This terminology is intended to provide clarity and should not be interpreted as implying any specific sequence or hierarchy unless explicitly stated otherwise.

In some examples, the first pattern comprises a second glyph, wherein rendering the first overlay comprises rendering the second glyph at a third pixel position in the video sequence at the first resolution; and wherein the rendering of the second overlay is controlled to render the second glyph at a fourth pixel position in the video sequence at the second resolution, wherein the fourth pixel position is obtained by mapping the third pixel position to the fourth pixel position according to the ratio.

Accordingly, by aligning the rendering pixel positions of multiple glyphs, the compression efficiency of the hierarchical encoding process may be further improved.

In some examples, the rendering position of each glyph in the first pattern is aligned between the two overlays according to the ratio between the first resolution and the second resolution. However, in other cases, only a subset of glyphs in the first pattern is aligned using this technique. The decision on the number of glyphs to align may be made by considering several factors including for example the computational overhead of the alignment process, the visual appearance of the glyphs in the second overlay (ensuring properties of the rendered pattern, like kerning and spacing are aesthetically pleasing), and the benefits of reduced bitrate and improved compression efficiency.

In some examples, wherein the first pattern comprises a first and a second group of glyphs, each group of glyphs comprises a plurality of glyphs, wherein the first glyph is part of the first group, and wherein the second glyph is part of the second group. In some examples, the groups correspond to words. In some examples, the groups are separated by a whitespace in the first pattern, and the different groups are determined using the whitespace as a boundary rule. In some examples, other suitable boundary rules are used. The boundary rules may be language specific. For example, some languages do not use spaces between words, and for these languages, other rules may apply to detect the groups, e.g. using an invisible character/glyph such as the "Zero width space" (ZWSP) character as boundary rule.

In some examples, each group (e.g., word) may be aligned as described above, using at least one glyph per group.

In some examples the rendering of the second overlay comprises rendering glyphs different from the first glyph in the first group of glyphs using a glyph layout algorithm, wherein a respective pixel position for glyphs different from the first glyph in the first group of glyphs is determined using the glyph layout algorithm and the second pixel position. Similarly, rendering glyphs different from the second glyph in the second group of glyphs may be accomplished using the glyph layout algorithm. Advantageously, by aligning each group of glyphs using a subset of the glyphs in the group (such as one glyph) and rendering the remaining glyphs in the group using a standard typesetting or text layout algorithm (which can also be referred to as a text shaping algorithm), each word can be consistently aligned between the resolutions. The rendering positions of glyphs within a specific group (i.e., those glyphs not specifically controlled using the mapping techniques) are determined using a layout algorithm to facilitate that kerning and other typographical details are visually appealing to the user. An additional advantage of this approach is that it may help maintaining the readability of the text across different resolutions. This approach balances the need for precise alignment with the processing complexity and visual appearance, ensuring efficient compression while maintaining high visual quality and readability.

In some examples, the first pattern comprises a first and a second group of glyphs, wherein the first glyph and the second glyph are part of the first group. Consequently, as described above, more than one glyph within a group/word may be aligned using the ratio between the first resolution and the second resolution as described above. Advantageously, compression efficiency may be increased as discussed above.

In some examples, the first resolution is the lower resolution. Mapping from a lower resolution to a higher resolution advantageously may reduce the likelihood of pixel misalignment due to sub-pixel positioning. When glyph positions are mapped between resolutions, the resulting coordinates in the mapped resolution may fall between pixel boundaries, creating sub-pixel positions. These sub-pixel positions can be rounded to the nearest integer, leading to shifts in the placement of the glyph. Mapping from a lower resolution to a higher resolution may result in that any such misalignment is less noticeable and thus has a smaller impact on compression efficiency compared to downscaling, where larger discrepancies and increased impact on compression efficiency can occur.

In some examples, the first overlay comprises a second pattern of one or more glyphs, and wherein the second overlay comprises a third pattern of one or more glyphs, the third pattern being different from the second pattern, wherein the method further comprises: determining a first pixel area required to render the second pattern in the video sequence at the first resolution, and determining a second pixel area required to render the third pattern in the video sequence at the first resolution; and wherein the rendering of the first overlay is controlled to render the one or more glyphs of the first pattern outside both the first and the second pixel area.

Advantageously, by determining the areas needed for the dynamic parts of the overlays (i.e., the second and third patterns) in advance and ensuring that the static parts (the first pattern) are rendered outside these areas, this method maintains a clear separation between static and dynamic content. The separation facilitates that the static parts are rendered at a distance from the dynamic parts, regardless of whether the dynamic part appears larger in the first resolution or the second resolution. Consequently, this technique facilitates that the static content of the overlays (the first pattern) does not interfere with the dynamic content in either resolution while still being rendered at a corresponding position between the first and second resolutions, as described above. This approach preserves the visual integrity of the video sequence and increases compression efficiency.

In some examples, the method further comprises transmitting the base layer in a first data stream and transmitting the base layer and the enhancement layer in a second data stream.

Transmitting the base layer in a first data stream and both the base layer and the enhancement layer in a second data stream may allow for scalable video streaming, enabling devices with lower bandwidth or processing capabilities to receive only the base layer, ensuring basic video playback. Meanwhile, devices with higher bandwidth and processing power can receive both layers, benefiting from enhanced video quality. This dual-stream method also provides flexibility in network conditions, as one of the streams can be prioritized to maintain continuous playback even when network bandwidth fluctuates. Moreover, since the base layer includes the overlay, the information provided in the overlay remains available in both data streams.

In some examples, the method comprises transmitting a data stream including the base layer and the enhancement layer on a communication channel; receiving an indication of network congestion on the communication channel; and adjusting the transmission of the data stream to not include the enhancement layer.

The indication of network congestion on the communication channel may be implemented using various techniques. For example, network performance metrics such as packet loss, latency, and jitter may be monitored. When these metrics exceed predefined thresholds, it may trigger an indication of congestion.

By dynamically adjusting the transmission to exclude the enhancement layer during network congestion, this example may ensure that the base layer is still delivered, maintaining uninterrupted video streaming. Since the base layer includes the overlay, the information provided in the overlay remains available in the data stream.

According to a second aspect of the disclosure, the above object is achieved by a non-transitory computer-readable storage medium having stored thereon instructions for implementing the method according to the first aspect when executed on a device having processing capabilities.

According to a third aspect of the disclosure, the above object is achieved by a device for rendering overlays in a hierarchically encoded video sequence having an enhancement layer and a base layer, the device configured for: representing a video sequence at a first resolution and a second resolution, wherein one of the first and second resolution is a lower resolution compared to the other one of the first and the second resolution; rendering a first overlay comprising a first pattern of one or more glyphs in the video sequence at the first resolution, wherein a first glyph of the one or more glyphs is rendered at a first pixel position in the video sequence at the first resolution; rendering a second overlay in the video sequence at the second resolution, wherein the second overlay comprises the first pattern of one or more glyphs; wherein the rendering of the second overlay is controlled to render the first glyph of the first pattern at a second pixel position in the video sequence at the second resolution, wherein the second pixel position is obtained by mapping the first pixel position to the second pixel position according to a ratio between the first resolution and the second resolution; encoding the video sequence having the lower resolution in the base layer; and encoding a residual between the video sequence having the higher resolution and the video sequence having the lower resolution in an enhancement layer.

In some examples, the device of the third aspect is a camera, wherein the video sequence is captured by the camera.

According to a fourth aspect of the disclosure, the above object is achieved by a system comprising a first device of the third aspect, and a second device, wherein the first device is configured for: transmitting the base layer in a first data stream, and transmitting the base layer and the enhancement layer in a second data stream; and wherein the second device is configured to receive the first data stream and the second data stream, and use the first data stream for a first purpose, and the second data stream for a second, different purpose.

Accordingly, the second device is capable of receiving both data streams, utilizing the first data stream for one purpose and the second data stream for a different purpose. For example, the first data stream containing only the base layer could be used for real-time, low-bandwidth applications such as live video monitoring, where maintaining continuous playback is crucial even under network congestion. Meanwhile, the second data stream, which includes the enhancement layer, could be used for video recording. In recording scenarios, slight delays and higher bandwidth usage are acceptable because the focus is on capturing the highest possible video quality rather than on real-time playback. This dual-stream approach may enhance flexibility and efficiency, allowing the system to adapt to varying network conditions and application requirements, e.g., ensuring both real-time performance and high-quality video recording are achievable.

Other purposes include recording both streams and implementing varying retention policies for the recordings. For instance, the first data stream, which requires less storage space, could be retained for a longer period, while the second data stream, which requires more storage due to its higher quality, could be kept for a shorter period. This approach allows for efficient use of storage resources, ensuring that essential lower-resolution recordings are available for longer durations, while higher-quality recordings are preserved for immediate but shorter-term needs.

According to a fifth aspect of the disclosure, the above object is achieved by a system comprising a first device of the third aspect, a second device and a third device, wherein the first device is configured for: transmitting the base layer in a first data stream, and transmitting the base layer and the enhancement layer in a second data stream; and wherein the second device is configured to receive the first data stream, and wherein the third device is configured to receive the second data stream. This dual-stream approach allows the system to adapt to varying network conditions and application requirements. It enables different devices to handle different data streams according to their respective needs. For instance, the second device, which may prioritize low-bandwidth and real-time applications, can utilize the first data stream. Meanwhile, the third device, which may focus on applications requiring higher video quality, can process the second data stream. This setup may facilitate improved performance across different use cases, efficiently managing resources and network capabilities.

The second, third, fourth and fifth aspects may generally have the same features and advantages as the first aspect.

### Brief Description of the Drawings

The above, as well as additional objects, features, and advantages of the present invention, will be better understood through the following illustrative and non-limiting detailed description of embodiments of the present disclosure, with reference to the appended drawings, where the same reference numerals will be used for similar elements, wherein:
Figure 1 shows a device implementing techniques for rendering overlays in a hierarchically encoded video sequence having an enhancement layer and a base layer, according to embodiments;
Figure 2 shows a system comprising a first device of figure 1 and a second device configured to receive the hierarchically encoded video sequence from the first device in a plurality of data streams, according to embodiments;
Figure 3 shows a system comprising a first device of figure 1 and a second and third device each configured to receive the hierarchically encoded video sequence from the first device in separate data streams, according to embodiments;
Figure 4 shows misalignment between a glyph rendered in overlays at different resolutions;
Figure 5 shows how the misalignment of figure 4 is reduced using alignment techniques described herein, according to embodiments;
Figure 6 shows alignment between overlays comprising a pattern with groups of glyphs being rendered at different resolutions, according to embodiments;
Figure 7 shows alignment between overlays comprising both dynamic and static patterns of glyphs, according to embodiments;
Figure 8 shows a flow chart of a method for rendering overlays in a hierarchically encoded video sequence having an enhancement layer and a base layer, according to embodiments.

### Detailed Description

Hierarchical coding is a video compression technique that improves efficiency by organizing the data into multiple layers. The base layer contains the essential video information required for basic playback, providing a lower resolution and bitrate to ensure compatibility with a wide range of devices and network conditions. This layer ensures that even under limited bandwidth, the video can still be viewed with acceptable quality. The enhancement layer, on the other hand, includes additional data (residual data) that refines and enhances the video quality, offering higher resolution and better visual details. When both layers are available, they work together to provide an improved viewing experience.

In cases where the base layer might be viewed on its own, it may be advantageous to include any overlay information within this layer. Overlays often contain elements such as subtitles, annotations, or graphics that provide context or supplementary information to the video content. By embedding these overlays in the base layer, viewers can still access such information even when only the base layer is available, e.g., due to bandwidth constraints or device limitations.

If the intention is to provide both the base layer on its own (i.e. in a first stream) and the base layer enhanced by the enhancement layer (i.e., in a second stream), it is advisable to use different overlays (containing the same glyphs/information) for each resolution. For instance, when the overlay contains text, it is often better to render the overlay directly in the native resolution of each layer rather than rendering it at the highest resolution and scaling it down or vice versa.

A problem that may occur is that due to rendering overlays separately for each resolution, the glyphs may not align perfectly, which in turn will lead to an increased bit size of the enhancement layer. Such misalignment can result from differences in positioning, hinting, kerning, and other typographical adjustments.

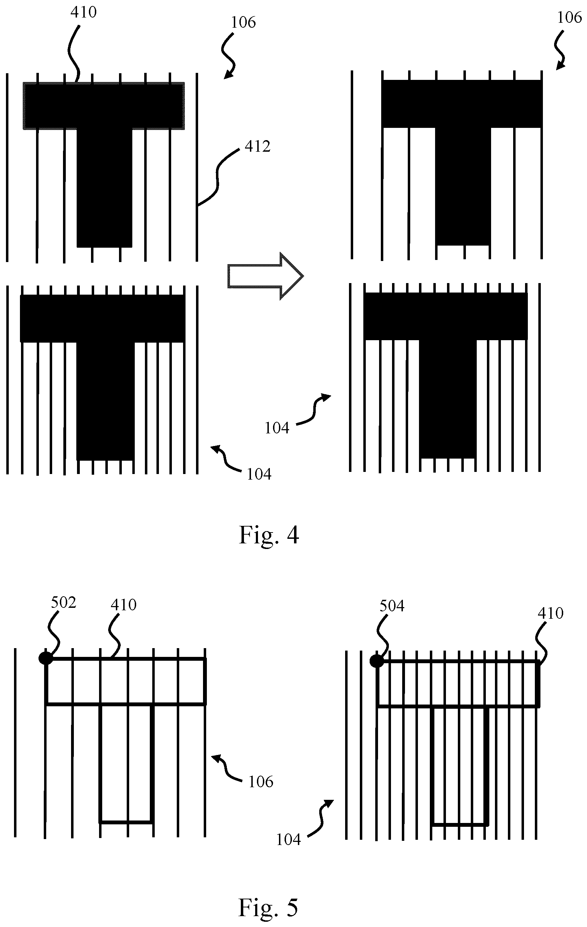

Figure 4 illustrates an example of misalignment that may occur due to hinting. Hinting involves adjusting the display of vector-based glyphs (characters) so that they align more precisely with the pixel grid of the screen. In Figure 4, a single glyph 410 (the character 'T') is used as an example. The left part of Figure 4 shows the glyph 410 positioned without hinting on a pixel grid (illustrated by one-dimensional lines 412) in two different resolutions: the upper part shows the lower, first, resolution 106, and the lower part shows the higher, second, resolution 104. In the right part of Figure 4, hinting is applied. As seen, the glyph 410 is positioned slightly more to the right in the lower resolution 106 compared to its position in the higher resolution 104. While only one glyph 410 is shown for simplicity, it should be noted that for overlays including multiple glyphs (i.e., a first pattern), the small sub-pixel differences between the positions of each individual glyph will accumulate. By the end of a pattern with a plurality of glyphs, the glyphs may be significantly misaligned. This misalignment results in larger differences between the overlay in the first resolution 104 and the overlay in the second resolution 106 thereby increasing the bitrate due to a larger residual. In Figure 4, the example focuses on misalignment along the x-dimension, and for simplicity, only the x-coordinates are illustrated in the figure. However, it is important to note that similar misalignment can also occur along the y-dimension.

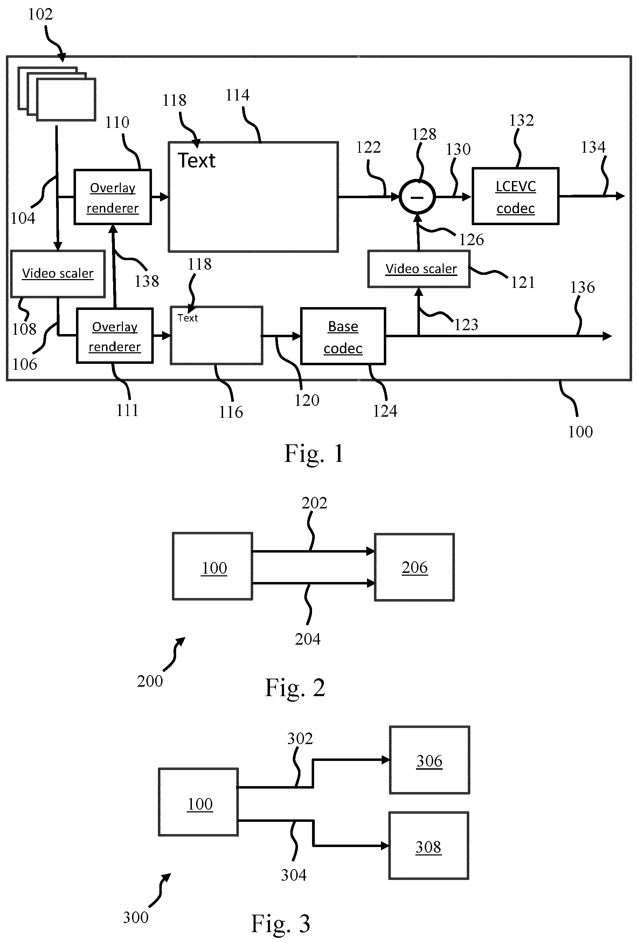

This disclosure provides techniques to achieve two overlays, one in a lower resolution and one in a higher resolution, while simultaneously reducing or minimizing the size of the enhancement layer. This is accomplished by controlling the rendering of one overlay based on the rendering positions of one or more glyphs in the other overlay. In other words, the rendering of the overlay in one of the resolutions is used to guide the rendering of the overlay in the other resolution. Figure 1 shows by way of example a device (system, component, etc.) 100 implementing such techniques.

The device 100 receives a video sequence 102 comprising a plurality of image frames. The device 100 is configured to render overlays in a hierarchically encoded video sequence having an enhancement layer and a base layer. The device 100 can thus represent the video sequence 102 in a first (e.g., lower) resolution 106 and a second (e.g., higher) resolution 104. For this reason, the device 100 comprises a video scaler component 108 configured to scale the video sequence 102 in the higher resolution 104 to a lower resolution 106. The device 100 is thus configured to provide a video sequence 102 in a first resolution 106 and a second resolution 104 according to a ratio (proportional relationship) between the first resolution and the second resolution using the video scaler component 108. The proportional relationship is subsequently used to guide the rendering of an overlay on the video sequence in the second resolution as discussed herein. The ratio may be predetermined, or configurable in the device 100.

It should be noted that in some examples (not shown in figure 1), the original video sequence 102 is first scaled to provide the higher resolution 104.

In the example shown in Figure 1, the lower resolution 106 is used to guide the rendering of the overlay in the higher resolution 104. However, in other examples, the higher resolution 104 may be used to guide the rendering in the lower resolution 106. Additionally, while the examples in Figures 1-7 are limited to two resolutions (a low and a high), the techniques described here are extendable to hierarchical encoding with more than two layers. In such cases, the rendering of the overlay in any one of the layers/resolutions can be used to guide the rendering of overlays in the remaining layers. For example, in a three-layer encoding scenario, the rendering of the overlay in the middle layer may be used to guide the rendering of overlays in both the base layer and the highest layer.

The device 100 comprises one or more overlay rendering components. For ease of explanation, Figure 1 illustrates a first overlay rendering component 111 responsible for rendering the first overlay 116, and a second overlay rendering component 110 responsible for rendering the second overlay 114, with guidance 138 from the first overlay rendering component 111. However, in other examples, the device 100 may include a single overlay rendering component configured to render both the first overlay 116 and the second overlay 114.

In Figure 1, the first rendering component 111 renders the first overlay 116 comprising a first pattern 118 of one or more glyphs (in this example the pattern comprises a string of characters spelling the word 'Text') in the video sequence at the first, lower, resolution 106. Each glyph (character) in the pattern 118 will thus be rendered at a respective pixel position in the first overlay 116 at the first resolution 106. The second rendering component 110 renders the second overlay 114 comprising the same first pattern 118 of one or more glyphs in the video sequence at the second, higher, resolution 104. The device 100 is configured such that rendering of the second overlay 114 is controlled using at least one of the pixel positions of the glyphs as rendered in the first overlay 116. The rendering of the second overlay 114 is thus controlled to render a first glyph of the first pattern 118 at a pixel position as guided 138 by the pixel position of the first glyph as rendered in the first overlay 116.

The mapping between positions in the different resolutions is done according to a ratio or scale factor between the first resolution and the second resolution. For example, if the ratio is 1:2 (i.e., the second resolution is double the first resolution), a pixel position (x, y) in the first resolution may be mapped to a pixel position (2x, 2y) in the second resolution to ensure alignment. Different ratios will result in other mapping rules.

Figure 5 visualizes an example of how controlling the rendering can reduce misalignment between overlays in different resolutions 106, 104 as explained in conjunction with Figure 4. Similar to Figure 4, Figure 5 illustrates only the x-coordinates for simplicity, and the example describing how the glyph rendering is guided focuses solely on the x-dimension. However, it is important to note that the guiding process can also be applied along the y-dimension.

For instance, consider the character 'T' in the first pattern 118 from Figure 1. In the example of Figure 5, this glyph 410 is rendered at a first pixel position 502 (x=1) in the first overlay at the lower resolution 106. Using a determined ratio of 1:2, the rendering of the first pattern 118 in the second overlay at the higher resolution 104 can be controlled so that the glyph 410 is rendered at a second pixel position 504 (x=2) which align the positions of the glyph 410 between the two resolutions 106, 104. Compare this to the example of figure 4 where the using kerning only would result in that the rendered position of the glyph would misalign (x=1 in both resolutions). In Figure 5, the top-left pixel position 502 of the glyph 410 is used for alignment purposes. However, this is just one example, and other positions for the glyph 410 can also be used for alignment. For instance, the centre pixel position, the bottom-left pixel position, or the centroid of the glyph 410 could be used as alignment points. By choosing different alignment points, the method can be tailored to better suit specific typographical requirements and visual consistency across different resolutions.

Returning to Figure 1, the second overlay 114 is overlayed onto the video sequence at the second resolution 104, resulting in the video sequence 122. For ease of description, this step is not included in figure 1. The first overlay 116 is overlayed onto the video sequence at the first resolution 106, resulting in the video sequence 120. For ease of description, this step is not included in figure 1. This video sequence 120 is then encoded using a base codec 124, such as AVC (H.264), HEVC (H.265), VP9, or AV1, into a base layer 136. Additionally, the base layer 136 is decoded (not shown in figure 1) into a decoded base layer 123 (corresponding to the video sequence 120 at the first resolution 106 including the first overlay 116) and the decoded base layer 123 is upscaled using a video scaling component 121 to create an upscaled version 126 at the second resolution 104. A residual 130, representing the difference between the upscaled version 126 and the video sequence 122, is determined using a residual determining component 128. This residual 130 is then encoded into an enhancement layer 134 using LCEVC's enhancement codec 132. It should be noted that while LCEVC is used as an example, other hierarchical codecs such as Scalable Video Coding (SVC) for H.264/AVC, SHVC (Scalable High-efficiency Video Coding) for H.265/HEVC or progressive JPEG may also be used depending on the desired output format.

In some examples, the device 100 is a camera. In these examples, the video sequence 102 may be captured by the camera. In other examples, the device 100 is coupled to a camera capturing the video sequence 102. In yet other examples, the device 100 receives the video sequence 102 from an external or internal storage.

Generally, the device (camera, server, etc.,) implementing the components 108, 110, 111, 121, 124, 128, 132 of Figure 1 may comprise circuitry which is configured to implement the components and, more specifically, their functionality. The described features in the device 100 can be implemented advantageously in one or more computer programs that are executable on a programmable system including at least one programmable processor coupled to receive data and instructions from, and to transmit data and instructions to, a data storage system. The computer program(s) may for example perform instructions for implementing the techniques described herein, wherein the instructions can be stored on a non-transitory computer-readable storage medium. Suitable processors for the execution of a program of instructions include, by way of example, both general and special purpose microprocessors, and the sole processor or one of multiple processors or cores, of any kind of computer. The processors can be supplemented by, or incorporated in, ASICs (application-specific integrated circuits). In some examples (not shown in figure 1), the components and functionality discussed herein are implemented in a plurality of connected devices.

Figure 2 illustrates an example of a system 200 comprising a first device 100 (e.g., the device shown in Figure 1) and a second device 206. The first device 100 is configured to transmit the base layer in a first data stream 202 and both the base layer and the enhancement layer in a second data stream 204. The second device 206 is configured to receive both the first data stream 202 and the second data stream 204, using each for different purposes. For instance, the second device 206 may use the low bitrate first data stream 202 for real-time display, such as for monitoring purposes, while using the high bitrate second data stream 204 for storage purposes. In other scenarios, the second device 206 may store both data streams 202 and 204, applying different retention policies to each.

In some examples (not shown in Figure 2), the first device 200 is configured to transmit only one data stream to the second device 206, either the base layer alone or both the base layer and the enhancement layer. The selection between these options is made based on indications of network congestion on the communication channel used for transmitting the data stream. For instance, when there is no indication of network congestion, the first device 200 may transmit a data stream that includes both the base layer and the enhancement layer to the second device. However, upon detecting network congestion, the first device 200 may adjust the transmission to exclude the enhancement layer, transmitting only the base layer. Advantageously, such a system may facilitate that the essential video content in the base layer is delivered reliably even under poor network conditions, thereby maintaining uninterrupted playback. Additionally, this system may optimize bandwidth usage, allowing the enhancement layer to be transmitted only when the network can support it, which may improve overall streaming efficiency and quality.

Figure 3 illustrates an example of a system 300 comprising a first device 100 (e.g., the device shown in Figure 1), a second device 306, and a third device 308. Similar to the setup in Figure 2, the first device 100 is configured to transmit the base layer in a first data stream 302 and both the base layer and the enhancement layer in a second data stream 304. In this example, the second device 306 is configured to receive the first data stream 302, while the third device 308 is configured to receive the second data stream 304. One possible implementation of this system 300 include real-time monitoring and high-quality recording. The second device 306, receiving the first data stream 302, may be used for real-time monitoring applications where low latency and continuous playback are critical. This setup ensures that essential video content is delivered reliably even under varying network conditions. Meanwhile, the third device 308, receiving the second data stream 304, may be used for high-quality recording or broadcasting, taking advantage of the enhanced video quality provided by the additional enhancement layer.

It should be noted that the examples shown in Figures 2 and 3 can be combined in any suitable way to create a versatile and adaptive video streaming system. Additionally, the network congestion management approach discussed herein can be integrated into such a setup or into any of the systems shown in Figure 2 or Figure 3.

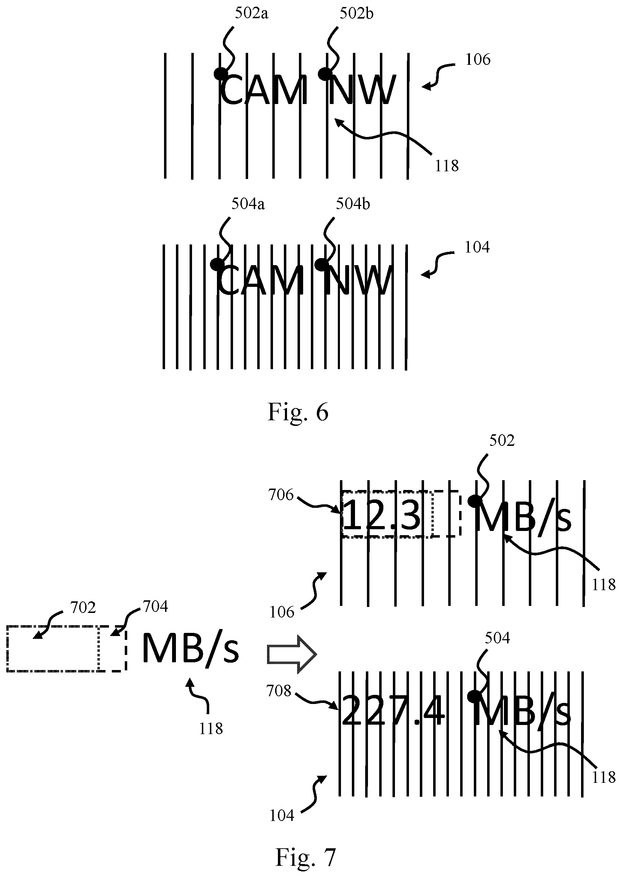

Figures 6-7 shows by way of example additional details that can be implemented to the overlay alignment techniques as described above. For example, as shown in figure 6, the rendering of the second overlay (at the second resolution 104) can be performed using a plurality of pixel positions from the rendering of glyphs in the first overlay at the first resolution 106. In Figure 6, the pattern of glyphs 118 comprises the text 'CAM NW'.

In some examples, the rendering of the second overlay in the second resolution 104 is guided by at least two pixel positions of glyphs as rendered in the first resolution 106. In addition to determine a first pixel position 502a for a first glyph ('C') in the first overlay, also a third pixel position 502b for a second glyph ('N') in the first overlay is determined. The rendering of the second overlay at the second resolution 104 is then controlled such that rendering of the first glyph ('C') of the first pattern 118 is guided to a second pixel position 504a at the second resolution 104, wherein the second pixel position 504a is obtained by mapping the first pixel position 502a to the second pixel position 504a according to a ratio between the first resolution 106 and the second resolution 106. Similarly, the rendering of the second overlay at the second resolution 104 is then controlled such that rendering of the second glyph ('N') of the first pattern 118 is guided to a fourth pixel position 504b at the second resolution 104, wherein the second pixel position 504b is obtained by mapping the third pixel position 502b to the fourth pixel position 504b according to the ratio. For example, if the ratio is 1:2, the x-value of the first pixel position 502a is 2 and the x-value of the third pixel position 502b is 6, this would result in that the x-value of the second pixel position 504a is 4 and the x-value of the fourth pixel position 504b is 12 (using the mapping rule 2x).

In some examples, as the one shown in Figure 6, the first pattern 118 comprises a first group of glyphs ('CAM') and a second group of glyphs ('NW') separated by whitespace. As discussed above, whitespace is just one method of identifying groups of glyphs for the techniques described herein. Other suitable characters or markers, such as the "Zero Width Space" (ZWSP) character, may also be employed to define the boundaries between glyph groups. These group boundary rules help in organizing glyphs in the first pattern 118 into distinct segments (e.g., words or other groups such as a group of letters and a group of numbers, etc.), which can be particularly useful for rendering and alignment purposes.

In such examples, the rendering of the second overlay at the second resolution 104 can be guided such that the pixel position of the first glyph 'C' (part of the first group 'CAM') in the second resolution 104 is aligned based on the pixel position of the corresponding first glyph in the first resolution 106, and similarly, the rendering position of the second glyph 'N' (part of the second group 'NW') in the second resolution 104 is guided based on the pixel position of the corresponding second glyph in the first resolution 106. This method facilities that each group of glyphs is aligned across different resolutions, reducing potential misalignment caused by scaling, kerning and hinting. In some cases, the rendering of the second overlay involves rendering the glyphs ('A' and 'M') in the first group ('CAM') using a glyph layout algorithm (text shaping). Here, the pixel positions for the glyphs ('A' and 'M'), different from the first glyph ('C'), are determined using this algorithm and the second pixel position (504a). Thus, the rendering of the first glyph ('C') is precisely guided by its rendering position 502a in the first overlay at the first resolution 106 and the ratio as explained above. The remaining glyphs ('A' and 'M') in the group are then rendered based on the rendering position 504a of the guided glyph ('C') and the glyph layout algorithm, which implements properties such as kerning and hinting to determine their pixel positions. The similar approach is implemented for the second group of glyphs ('NW'). With this method, the group or word as a whole is aligned between the resolutions 106, 104, but the visualization of each group follows typographical rules. This approach ensures that each glyph in a group is accurately placed according to typographical standards, maintaining visual consistency and at the same time providing alignment across different resolutions.

In some examples, not shown in Figure 6, a subset of glyphs (e.g., a plurality of glyphs), or all glyphs in a group of glyphs are aligned by guiding the respective glyphs at the second resolution 104 based on the rendering positions of the same glyphs at the first resolution 106.

In some cases, the overlays comprise a combination of static and dynamic patterns of glyphs. The static pattern remains the same in both the first resolution and the second resolution, while the dynamic pattern varies depending on which resolution it is rendered in. For example, an overlay indicating the bitrate of a data stream (e.g., data streams 202, 204 from figure 2 or data streams 302, 304 from figure 3) may include a static part such as "Mbit/second" and a dynamic part such as "X," where "X" represents the actual bitrate value and changes between resolutions. Similarly, an overlay indicating the resolution of the video sequence may include a static part like "MPixels" and a dynamic part like "Y," where "Y" represents the resolution value and differs between resolutions. In such examples, the dynamic part may occupy different amounts of space depending on its value, which can complicate the alignment of the static part. Figure 7 shows by way of example a technique to maintain the alignment of the static part to reduce the bitrate required for encoding the enhancement layer.

In figure 7, the overlay represents the bitrate of the data streams and comprises a dynamic part (the second and third pattern) 706, 708 that varies depending on the resolutions 106, 104 and one static part (the first pattern) 118 that does not vary between the resolutions 106, 104. To facilitate the alignment of the static part 118 between the resolutions 106, 104, the following techniques may be used. In this example, the second pattern comprises the text '12.3' while the third pattern comprises the text '227.4'.

To facilitate the alignment of the static first pattern 118 ('MB/s'), a first pixel area 702 required to render the second pattern 706 in the video sequence at the first resolution 106 is determined. Additionally, a second pixel area 704 required to render the third pattern 708 in the video sequence at the first resolution 106 is determined. The rendering of the first pattern 118 in the first overlay is then controlled such that all glyphs of the first pattern 118 are rendered outside the combined area of the first 702 and second 704 pixel areas. This combined area corresponds to the larger of the two pixel areas (in this case the second pixel area 704, ensuring that the static pattern is placed beyond the maximum space occupied by the dynamic patterns.

In this example, the first and second pixel areas cover a portion of the first overlay from x=1 to x=5. This means that the first glyph ('M') of the first pattern 118 is rendered at x=6 in the first resolution 106. Consequently, the first glyph ('M') of the first pattern 118 is rendered at x=11 in the second resolution 104 (according to the ratio 1:2 as discussed above). The dynamic patterns (the second pattern 706 in the overlay at the first resolution 106 and the third pattern 708 in the overlay at the second resolution 104) are rendered at corresponding positions between the first and second overlays but occupy different amounts of space in each overlay.

As a result, the distance between the second, dynamic, pattern 706 and the first, static, pattern 118 in the first overlay is larger than the distance between the third, dynamic, pattern 708 and the first, static, pattern 118 in the second overlay. However, aligning the static parts 118 of the overlays reduces the bitrate required for encoding the enhancement layer compared to maintaining the same distance between the static and dynamic parts of the overlays across both resolutions 106 and 104. This approach may improve compression efficiency while accommodating the varying sizes of dynamic content.

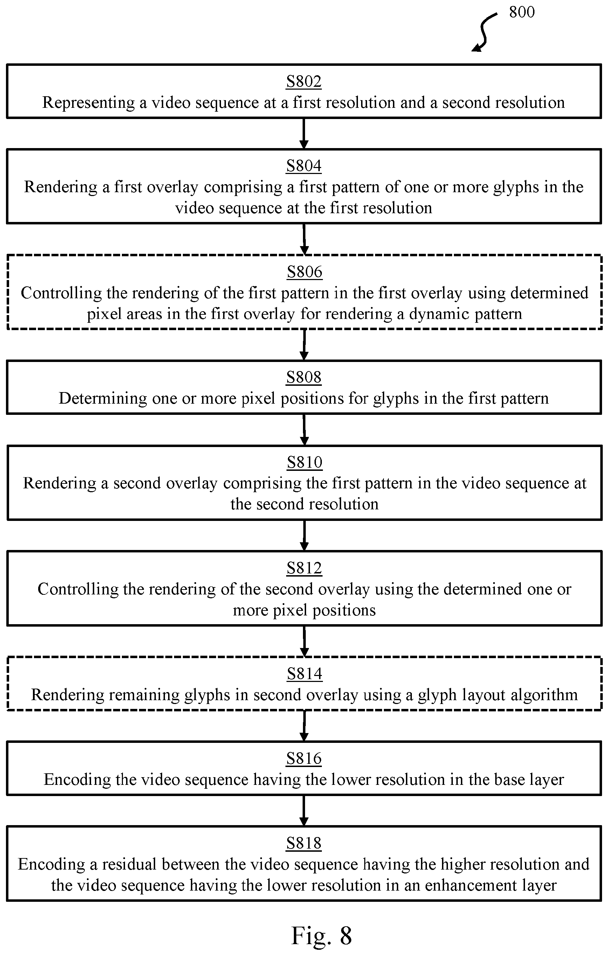

Figure 8 shows by way of example a flow chart of a method 800 for rendering overlays in a hierarchically encoded video sequence having an enhancement layer and a base layer.

The method 800 comprises the step of representing S802 a video sequence at a first resolution and a second resolution. wherein one of the first and second resolution is a lower resolution compared to the other one of the first and the second resolution. In some examples, the first resolution is lower than the second resolution, and in some examples, the second resolution is lower than the first resolution.

The method comprises rendering S804 a first overlay comprising a first pattern of one or more glyphs in the video sequence at the first resolution. The rendering of the first pattern may be done using a glyph layout algorithm (i.e., a text shaping algorithm).

In some examples, the overlay comprises a static, first, pattern, which is the same independently of which resolution the overlay belongs to, and one dynamic part, a second and third pattern, which differs depending on the resolution, such that the first overlay comprises the second pattern and a second overlay (which is rendered in the video sequence at the second resolution) comprises the third pattern. In these examples, the method 800 may comprise the step of controlling S806 the rendering of the static pattern in the first overlay using determined pixel areas in the first overlay for rendering a dynamic pattern. The controlling S806 comprises determining a first pixel area required to render the second pattern in the video sequence at the first resolution and determining a second pixel area required to render the third pattern in the video sequence at the first resolution; and wherein the rendering of the first overlay is controlled S806 to render the one or more glyphs of the first pattern outside both the first and the second pixel area.

The method 800 further comprises determining S808 at least a first pixel position at which a first glyph of the one or more glyphs of the first pattern is rendered in the video sequence at the first resolution.

The method 800 further comprises rendering S810 the second overlay in the video sequence at the second resolution, wherein the second overlay comprises the first pattern as discussed above.

The rendering of the second overlay is controlled S812 according to the determined S808 pixel positions for the glyphs as rendered in the video sequence at the first resolution. For each of the determined S808 pixel positions, the corresponding pixel position of the same glyphs are controlled in the video sequence at the second resolution. For example, the rendering of the second overlay is controlled S812 to render the first glyph of the first pattern at a second pixel position in the video sequence at the second resolution, wherein the second pixel position is obtained by mapping the first pixel position to the second pixel position according to a ratio between the first resolution and the second resolution to render the first glyph of the first pattern at determined second pixel position in the video sequence at the second resolution.

In some examples, not all glyphs of the first pattern as rendered in the video sequence at the second resolution is controlled using the corresponding rendering positions of the glyphs in the video sequence at the first resolution. In these examples, the rendering of the second overlay may comprise rendering S814 the remaining glyphs (i.e., the glyphs not controlled according to step S812) using a glyph layout algorithm (i.e., a text shaping algorithm), wherein a respective pixel position for glyphs not being controlled according to step S812 is determined using the glyph layout algorithm and the position of the glyphs as controlled according to step S812.

The method further comprises encoding S816 the video sequence having the lower resolution in the base layer; and encoding S818 a residual between the video sequence having the higher resolution and the video sequence having the lower resolution in an enhancement layer.

## Claims

1. A method (800) for rendering overlays in a hierarchically encoded video sequence having an enhancement layer and a base layer, comprising:
representing (S802) a video sequence (102) at a first resolution (106) and a second resolution (104), wherein one of the first and second resolution is a lower resolution compared to the other one of the first and the second resolution, wherein the representing comprises scaling the video sequence in the higher resolution to the lower resolution, wherein the method further comprises, after the scaling:
rendering (S804) a first overlay (116) comprising a first pattern (118) of one or more glyphs in the video sequence at the first resolution, wherein a first glyph of the one or more glyphs is rendered at a first pixel position (502, 502a) in the video sequence at the first resolution;
rendering (S810) a second overlay (114) in the video sequence at the second resolution, wherein the second overlay comprises the first pattern of one or more glyphs;
wherein the rendering of the second overlay is controlled (S812), by guidance (138) from the rendering of the first overlay, to render the first glyph of the first pattern at a second pixel position (504, 504a) in the video sequence at the second resolution, wherein the second pixel position is obtained by mapping the first pixel position to the second pixel position according to a ratio between the first resolution and the second resolution;
encoding (S816) the video sequence having the lower resolution in the base layer (136); and
encoding (S818) a residual (130) between the video sequence having the higher resolution and the video sequence having the lower resolution in an enhancement layer (134).

2. The method of claim 1,
wherein the first pattern comprises a second glyph, wherein rendering the first overlay comprises rendering the second glyph at a third pixel position (502b) in the video sequence at the first resolution; and
wherein the rendering of the second overlay is controlled to render the second glyph at a fourth pixel position (504b) in the video sequence at the second resolution, wherein the fourth pixel position is obtained by mapping the third pixel position to the fourth pixel position according to the ratio.

3. The method of claim 2,
wherein the first pattern comprises a first and a second group of glyphs, each group of glyphs comprises a plurality of glyphs, wherein the first glyph is part of the first group, and wherein the second glyph is part of the second group.

4. The method of claim 3, wherein the rendering of the second overlay comprises rendering (S814) glyphs different from the first glyph in the first group of glyphs using a glyph layout algorithm, wherein a respective pixel position for glyphs different from the first glyph in the first group of glyphs is determined using the glyph layout algorithm and the second pixel position.

5. The method of claim 2, wherein the first pattern comprises a first and a second group of glyphs, wherein the first glyph and the second glyph are part of the first group.

6. The method of any one of claims 1-5, wherein the first resolution is the lower resolution.

7. The method of any one of claims 1-6, wherein the first overlay comprises a second pattern (706) of one or more glyphs, and wherein the second overlay comprises a third pattern (708) of one or more glyphs, the third pattern being different from the second pattern, wherein the method further comprises:
determining a first pixel area (702) required to render the second pattern in the video sequence at the first resolution, and determining a second pixel (704) area required to render the third pattern in the video sequence at the first resolution; and
wherein the rendering of the first overlay is controlled (S806) to render the one or more glyphs of the first pattern outside both the first and the second pixel area.

8. The method of any one of claims 1-7, further comprising:
transmitting the base layer in a first data stream (202, 302), and transmitting the base layer and the enhancement layer in a second data stream (204, 304).

9. The method of any one of claim 1-7 further comprising:
transmitting a data stream including the base layer and the enhancement layer on a communication channel;
receiving an indication of network congestion on the communication channel;
adjusting the transmission of the data stream to not include the enhancement layer.

10. A non-transitory computer-readable storage medium having stored thereon instructions for implementing the method according to any one of claims 1-9 when executed on a device having processing capabilities.

11. A device (100) for rendering overlays in a hierarchically encoded video sequence having an enhancement layer and a base layer, the device configured for:
representing (S802) a video sequence (102) at a first resolution (106) and a second resolution (104), wherein one of the first and second resolution is a lower resolution compared to the other one of the first and the second resolution; wherein the representing comprises scaling the video sequence in the higher resolution to the lower resolution, wherein the device is further configured for, after the scaling:
rendering (S804) a first overlay (116) comprising a first pattern (118) of one or more glyphs in the video sequence at the first resolution, wherein a first glyph of the one or more glyphs is rendered at a first pixel position (502, 502a) in the video sequence at the first resolution;
rendering (S810) a second overlay (114) in the video sequence at the second resolution, wherein the second overlay comprises the first pattern of one or more glyphs;
wherein the rendering of the second overlay is controlled (S812), by guidance (138) from the rendering of the first overlay, to render the first glyph of the first pattern at a second pixel position (504, 504a) in the video sequence at the second resolution, wherein the second pixel position is obtained by mapping the first pixel position to the second pixel position according to a ratio between the first resolution and the second resolution;
encoding (S816) the video sequence having the lower resolution in the base layer (136); and
encoding (S818) a residual (130) between the video sequence having the higher resolution and the video sequence having the lower resolution in an enhancement layer (134).

12. The device of claim 11, being a camera, wherein the video sequence is captured by the camera.

13. A system (200) comprising a first device (100) of any one of claims 11-12, and a second device (206), wherein the first device is configured for:
transmitting the base layer in a first data stream (202), and transmitting the base layer and the enhancement layer in a second data stream (206); and
wherein the second device is configured to receive the first data stream and the second data stream, and use the first data stream for a first purpose, and the second data stream for a second, different purpose.

14. A system (300) comprising a first device (100) of any one of claims 11-12, a second device (306) and a third device (308), wherein the first device is configured for:
transmitting the base layer in a first data stream (302), and transmitting the base layer and the enhancement layer in a second data stream (304); and
wherein the second device is configured to receive the first data stream, and wherein the third device is configured to receive the second data stream.

## Patentansprüche

1. Verfahren (800) zum Rendern von Überlagerungen in einer hierarchisch codierten Videosequenz, die eine Erweiterungsschicht und eine Basisschicht aufweist, umfassend:
Darstellen (S802) einer Videosequenz (102) mit einer ersten Auflösung (106) und einer zweiten Auflösung (104), wobei eine von der ersten und der zweiten Auflösung im Vergleich zu der anderen von der ersten und der zweiten Auflösung eine niedrigere Auflösung ist, wobei das Darstellen das Skalieren der Videosequenz in der höheren Auflösung auf die niedrigere Auflösung umfasst, wobei das Verfahren nach dem Skalieren ferner Folgendes umfasst:
Rendern (S804) einer ersten Überlagerung (116), die ein erstes Muster (118) einer oder mehrerer Glyphen umfasst, in der Videosequenz mit der ersten Auflösung, wobei eine erste Glyphe der einen oder der mehreren Glyphen an einer ersten Pixelposition (502, 502a) in der Videosequenz mit der ersten Auflösung gerendert wird;
Rendern (S810) einer zweiten Überlagerung (114) in der Videosequenz mit der zweiten Auflösung, wobei die zweite Überlagerung das erste Muster einer oder mehrerer Glyphen umfasst;
wobei das Rendern der zweiten Überlagerung gesteuert wird (S812), durch Führung (138) aus dem Rendern der ersten Überlagerung, um die erste Glyphe des ersten Musters an einer zweiten Pixelposition (504, 504a) in der Videosequenz mit der zweiten Auflösung zu rendern, wobei die zweite Pixelposition durch Mapping der ersten Pixelposition auf die zweite Pixelposition gemäß einem Verhältnis zwischen der ersten Auflösung und der zweiten Auflösung erhalten wird;
Codieren (S816) der Videosequenz, die die niedrigere Auflösung aufweist, in der Basisschicht (136); und
Codieren (S818) eines Rests (130) zwischen der Videosequenz, die die höhere Auflösung aufweist, und der Videosequenz, die die niedrigere Auflösung aufweist, in einer Erweiterungsschicht (134).

2. Verfahren nach Anspruch 1,
wobei das erste Muster eine zweite Glyphe umfasst, wobei das Rendern der ersten Überlagerung das Rendern der zweiten Glyphe an einer dritten Pixelposition (502b) in der Videosequenz mit der ersten Auflösung umfasst; und wobei das Rendern der zweiten Überlagerung gesteuert wird, um die zweite Glyphe an einer vierten Pixelposition (504b) in der Videosequenz mit der zweiten Auflösung zu rendern, wobei die vierte Pixelposition durch Mapping der dritten Pixelposition auf die vierte Pixelposition gemäß dem Verhältnis erhalten wird.

3. Verfahren nach Anspruch 2,
wobei das erste Muster eine erste und eine zweite Gruppe von Glyphen umfasst, wobei jede Gruppe von Glyphen eine Vielzahl von Glyphen umfasst, wobei die erste Glyphe Teil der ersten Gruppe ist und wobei die zweite Glyphe Teil der zweiten Gruppe ist.

4. Verfahren nach Anspruch 3, wobei das Rendern der zweiten Überlagerung das Rendern (S814) von Glyphen, die sich von der ersten Glyphe in der ersten Gruppe von Glyphen unterscheiden, unter Verwendung eines Glyphenlayoutalgorithmus umfasst, wobei eine jeweilige Pixelposition für Glyphen, die sich von der ersten Glyphe in der ersten Gruppe von Glyphen unterscheiden, unter Verwendung des Glyphenlayoutalgorithmus und der zweiten Pixelposition bestimmt wird.

5. Verfahren nach Anspruch 2, wobei das erste Muster eine erste und eine zweite Gruppe von Glyphen umfasst, wobei die erste Glyphe und die zweite Glyphe Teil der ersten Gruppe sind.

6. Verfahren nach einem der Ansprüche 1-5, wobei die erste Auflösung die niedrigere Auflösung ist.

7. Verfahren nach einem der Ansprüche 1-6, wobei die erste Überlagerung ein zweites Muster (706) einer oder mehrerer Glyphen umfasst und wobei die zweite Überlagerung ein drittes Muster (708) einer oder mehrerer Glyphen umfasst, wobei sich das dritte Muster von dem zweiten Muster unterscheidet, wobei das Verfahren ferner Folgendes umfasst:
Bestimmen eines ersten Pixelbereichs (702), der erforderlich ist, um das zweite Muster in der Videosequenz mit der ersten Auflösung zu rendern, und Bestimmen eines zweiten Pixelbereichs (704), der erforderlich ist, um das dritte Muster in der Videosequenz mit der ersten Auflösung zu rendern; und
wobei das Rendern der ersten Überlagerung gesteuert wird (S806), um die eine oder die mehreren Glyphen des ersten Musters außerhalb sowohl des ersten als auch des zweiten Pixelbereichs zu rendern.

8. Verfahren nach einem der Ansprüche 1-7, ferner umfassend:
Übertragen der Basisschicht in einem ersten Datenstrom (202, 302) und Übertragen der Basisschicht und der Erweiterungsschicht in einem zweiten Datenstrom (204, 304).

9. Verfahren nach einem der Ansprüche 1-7, ferner umfassend:
Übertragen eines Datenstroms, der die Basisschicht und die Erweiterungsschicht enthält, auf einem Kommunikationskanal;
Empfangen einer Angabe einer Netzüberlastung auf dem Kommunikationskanal;
Anpassen der Übertragung des Datenstroms, sodass dieser die Erweiterungsschicht nicht enthält.

10. Nicht transitorisches computerlesbares Speichermedium, auf dem Anweisungen zum Implementieren des Verfahrens nach einem der Ansprüche 1-9 bei Ausführung auf einer Vorrichtung mit Verarbeitungsfähigkeiten gespeichert sind.

11. Vorrichtung (100) zum Rendern von Überlagerungen in einer hierarchisch codierten Videosequenz, die eine Erweiterungsschicht und eine Basisschicht aufweist, wobei die Vorrichtung konfiguriert ist zum:
Darstellen (S802) einer Videosequenz (102) mit einer ersten Auflösung (106) und einer zweiten Auflösung (104), wobei eine von der ersten und der zweiten Auflösung im Vergleich zu der anderen von der ersten und der zweiten Auflösung eine niedrigere Auflösung ist; wobei das Darstellen das Skalieren der Videosequenz in der höheren Auflösung auf die niedrigere Auflösung umfasst, wobei die Vorrichtung nach dem Skalieren ferner konfiguriert ist zum:
Rendern (S804) einer ersten Überlagerung (116), die ein erstes Muster (118) einer oder mehrerer Glyphen umfasst, in der Videosequenz mit der ersten Auflösung, wobei eine erste Glyphe der einen oder der mehreren Glyphen an einer ersten Pixelposition (502, 502a) in der Videosequenz mit der ersten Auflösung gerendert wird;
Rendern (S810) einer zweiten Überlagerung (114) in der Videosequenz mit der zweiten Auflösung, wobei die zweite Überlagerung das erste Muster einer oder mehrerer Glyphen umfasst;
wobei das Rendern der zweiten Überlagerung gesteuert wird (S812) durch Führung (138) aus dem Rendern der ersten Überlagerung, um die erste Glyphe des ersten Musters an einer zweiten Pixelposition (504, 504a) in der Videosequenz mit der zweiten Auflösung zu rendern, wobei die zweite Pixelposition durch Mapping der ersten Pixelposition auf die zweite Pixelposition gemäß einem Verhältnis zwischen der ersten Auflösung und der zweiten Auflösung erhalten wird;
Codieren (S816) der Videosequenz, die die niedrigere Auflösung aufweist, in der Basisschicht (136); und
Codieren (S818) eines Rests (130) zwischen der Videosequenz, die die höhere Auflösung aufweist, und der Videosequenz, die die niedrigere Auflösung aufweist, in einer Erweiterungsschicht (134).

12. Vorrichtung nach Anspruch 11, die eine Kamera ist, wobei die Videosequenz durch die Kamera erfasst wird.

13. System (200), umfassend eine erste Vorrichtung (100) nach einem der Ansprüche 11-12 und eine zweite Vorrichtung (206), wobei die erste Vorrichtung konfiguriert ist zum:
Übertragen der Basisschicht in einem ersten Datenstrom (202) und Übertragen der Basisschicht und der Erweiterungsschicht in einem zweiten Datenstrom (206); und
wobei die zweite Vorrichtung dazu konfiguriert ist, den ersten Datenstrom und den zweiten Datenstrom zu empfangen und den ersten Datenstrom für einen ersten Zweck und den zweiten Datenstrom für einen zweiten, anderen Zweck zu verwenden.

14. System (300), umfassend eine erste Vorrichtung (100) nach einem der Ansprüche 11-12, eine zweite Vorrichtung (306) und eine dritte Vorrichtung (308), wobei die erste Vorrichtung konfiguriert ist zum:
Übertragen der Basisschicht in einem ersten Datenstrom (302) und Übertragen der Basisschicht und der Erweiterungsschicht in einem zweiten Datenstrom (304); und
wobei die zweite Vorrichtung dazu konfiguriert ist, den ersten Datenstrom zu empfangen, und wobei die dritte Vorrichtung dazu konfiguriert ist, den zweiten Datenstrom zu empfangen.

## Revendications

1. Procédé (800) de rendu de superpositions dans une séquence vidéo codée hiérarchiquement ayant une couche d'amélioration et une couche de base, comprenant :
la représentation (S802) d'une séquence vidéo (102) à une première résolution (106) et à une seconde résolution (104), l'une de la première et de la seconde résolution étant une résolution inférieure par rapport à l'autre de la première et de la seconde résolution, la représentation comprenant la mise à l'échelle de la séquence vidéo dans la résolution supérieure à la résolution inférieure, le procédé comprenant en outre, après la mise à l'échelle :
le rendu (S804) d'une première superposition (116) comprenant un premier motif (118) d'un ou plusieurs glyphes dans la séquence vidéo à la première résolution, un premier glyphe du ou des glyphes étant rendu à une première position de pixel (502, 502a) dans la séquence vidéo à la première résolution ;
le rendu (S810) d'une seconde superposition (114) dans la séquence vidéo à la seconde résolution, la seconde superposition comprenant le premier motif d'un ou plusieurs glyphes ;
le rendu de la seconde superposition étant commandé (S812), par guidage (138) à partir du rendu de la première superposition, pour rendre le premier glyphe du premier motif à une deuxième position de pixel (504, 504a) dans la séquence vidéo à la seconde résolution, la deuxième position de pixel étant obtenue par mappage de la première position de pixel à la deuxième position de pixel selon un rapport entre la première résolution et la seconde résolution ;
le codage (S816) de la séquence vidéo ayant la résolution inférieure dans la couche de base (136) ; et
le codage (S818) d'un résidu (130) entre la séquence vidéo ayant la résolution supérieure et la séquence vidéo ayant la résolution inférieure dans une couche d'amélioration (134).

2. Procédé selon la revendication 1,
le premier motif comprenant un second glyphe, le rendu de la première superposition comprenant le rendu du second glyphe à une troisième position de pixel (502b) dans la séquence vidéo à la première résolution ; et
le rendu de la seconde superposition étant commandé pour rendre le second glyphe à une quatrième position de pixel (504b) dans la séquence vidéo à la seconde résolution, la quatrième position de pixel étant obtenue par mappage de la troisième position de pixel à la quatrième position de pixel selon le rapport.

3. Procédé selon la revendication 2,
le premier motif comprenant un premier et un second groupe de glyphes, chaque groupe de glyphes comprenant une pluralité de glyphes, le premier glyphe faisant partie du premier groupe, et le second glyphe faisant partie du second groupe.

4. Procédé selon la revendication 3, le rendu de la seconde superposition comprenant le rendu (S814) de glyphes différents du premier glyphe dans le premier groupe de glyphes en utilisant un algorithme de disposition de glyphes, une position de pixel respective pour des glyphes différents du premier glyphe dans le premier groupe de glyphes étant déterminée en utilisant l'algorithme de disposition de glyphes et la deuxième position de pixel.

5. Procédé selon la revendication 2, le premier motif comprenant un premier et un second groupe de glyphes, le premier glyphe et le second glyphe faisant partie du premier groupe.

6. Procédé selon l'une quelconque des revendications 1 à 5, la première résolution étant la résolution inférieure.

7. Procédé selon l'une quelconque des revendications 1 à 6, la première superposition comprenant un deuxième motif (706) d'un ou plusieurs glyphes, et la seconde superposition comprenant un troisième motif (708) d'un ou plusieurs glyphes, le troisième motif étant différent du deuxième motif, le procédé comprenant en outre :
la détermination d'une première zone de pixels (702) requise pour rendre le deuxième motif dans la séquence vidéo à la première résolution, et la détermination d'une seconde zone de pixels (704) requise pour rendre le troisième motif dans la séquence vidéo à la première résolution ; et
le rendu de la première superposition étant commandé (S806) pour rendre le ou les glyphes du premier motif à l'extérieur de la première et de la seconde zone de pixels.

8. Procédé selon l'une quelconque des revendications 1 à 7, comprenant en outre :
la transmission de la couche de base dans un premier flux de données (202, 302), et la transmission de la couche de base et de la couche d'amélioration dans un second flux de données (204, 304).

9. Procédé selon l'une quelconque des revendications 1 à 7, comprenant en outre :
la transmission d'un flux de données comprenant la couche de base et la couche d'amélioration sur un canal de communication ;
la réception d'une indication de congestion du réseau sur le canal de communication ;
le réglage de la transmission du flux de données pour ne pas inclure la couche d'amélioration.

10. Support de stockage non transitoire lisible par ordinateur ayant, stockées sur celui-ci, des instructions pour mettre en œuvre le procédé selon l'une quelconque des revendications 1 à 9 lorsqu'elles sont exécutées sur un dispositif ayant des capacités de traitement.

11. Dispositif (100) de rendu de superpositions dans une séquence vidéo codée hiérarchiquement, comprenant une couche d'amélioration et une couche de base, le dispositif étant configuré pour :
la représentation (S802) d'une séquence vidéo (102) à une première résolution (106) et à une seconde résolution (104), l'une de la première et de la seconde résolution étant une résolution inférieure par rapport à l'autre de la première et de la seconde résolution ; la représentation comprenant la mise à l'échelle de la séquence vidéo dans la résolution supérieure à la résolution inférieure, le dispositif étant en outre configuré pour, après la mise à l'échelle :
le rendu (S804) d'une première superposition (116) comprenant un premier motif (118) d'un ou plusieurs glyphes dans la séquence vidéo à la première résolution, un premier glyphe du ou des glyphes étant rendu à une première position de pixel (502, 502a) dans la séquence vidéo à la première résolution ;
le rendu (S810) d'une seconde superposition (114) dans la séquence vidéo à la seconde résolution, la seconde superposition comprenant le premier motif d'un ou plusieurs glyphes ;
le rendu de la seconde superposition étant commandé (S812), par guidage (138) à partir du rendu de la première superposition, pour rendre le premier glyphe du premier motif à une deuxième position de pixel (504, 504a) dans la séquence vidéo à la seconde résolution, la deuxième position de pixel étant obtenue par mappage de la première position de pixel à la deuxième position de pixel selon un rapport entre la première résolution et la seconde résolution ;
le codage (S816) de la séquence vidéo ayant la résolution inférieure dans la couche de base (136) ; et
le codage (S818) d'un résidu (130) entre la séquence vidéo ayant la résolution supérieure et la séquence vidéo ayant la résolution inférieure dans une couche d'amélioration (134).

12. Dispositif selon la revendication 11, qui est une caméra, la séquence vidéo étant capturée par la caméra.

13. Système (200) comprenant un premier dispositif (100) selon l'une quelconque des revendications 11 et 12, et un deuxième dispositif (206), le premier dispositif étant configuré pour :
la transmission de la couche de base dans un premier flux de données (202), et la transmission de la couche de base et de la couche d'amélioration dans un second flux de données (206) ; et
le deuxième dispositif étant configuré pour recevoir le premier flux de données et le second flux de données, et pour utiliser le premier flux de données dans un premier but, et le second flux de données dans un second but, différent.

14. Système (300) comprenant un premier dispositif (100) selon l'une quelconque des revendications 11 et 12, un deuxième dispositif (306) et un troisième dispositif (308), le premier dispositif étant configuré pour :
la transmission de la couche de base dans un premier flux de données (302), et la transmission de la couche de base et de la couche d'amélioration dans un second flux de données (304) ; et
le deuxième dispositif étant configuré pour recevoir le premier flux de données, et le troisième dispositif étant configuré pour recevoir le second flux de données.
